# EUROPEAN PATENT APPLICATION

(11) **EP 2 442 474 A1**
(43) Date of publication of application: **18.04.2012**
(21) Application number: 10819877.1
(22) Date of filing: 20.09.2010
(51) Int. Cl.: H04L 1/18, H04B 7/26

(54) **UPLINK HYBRID AUTOMATIC REPEAT REQUEST METHOD AND DEVICE IN TRANSPARENT RELAY NETWORK**

(30) Priority: 29.09.2009 CN 200910110719
(71) Applicant: Huawei Technologies Co., Ltd., Guangdong 518129 (CN)
(72) Inventor: QIAN, Li, Shenzhen Guangdong 518129 (CN)
(74) Representative: Körber, Martin Hans
(86) International application number: PCT/CN2010/077132
(87) International publication number: WO 2011/038648

(57) **Abstract**

An uplink Hybrid Automatic Repeat reQuest (HARQ) method in a transparent relay network is provided according to embodiments of the present invention, which includes: a relay station intercepts and decodes uplink data sent from a mobile terminal to a base station; the relay station judges whether decoding of the uplink data is successful; when the relay station judges that the decoding of the uplink data is successful, the relay station sends acknowledgment response information to the base station to notify the base station that the relay station has received the uplink data successfully, and sends the acknowledgment response information to the mobile terminal when the base station does not decode the uplink data successfully; when the relay station judges that the decoding of the uplink data is successful and receives negative-acknowledgment information returned by the base station to the relay station, the relay station sends the intercepted uplink data to the base station, where the negative-acknowledgment information represents that the base station does not successfully decode the uplink data sent from the mobile terminal to the base station. Therefore, embodiments of the present invention can reduce power consumption of the mobile terminal.

## Description

This application claims priority to Chinese Patent Application No. 200910110719.X, filed with the Chinese Patent Office on September 29, 2009 and entitled "UPLINK HYBRID AUTOMATIC REPEAT REQUEST METHOD AND DEVICE IN A TRANSPARENT RELAY NETWORK", which is incorporated herein by reference in its entirety.

### FIELD OF THE INVENTION

The present invention relates to the field of communications technologies, and in particular, to an uplink Hybrid Automatic Repeat reQuest (HARQ) method and a device in a transparent relay network.

### BACKGROUND OF THE INVENTION

A fundamental idea of a wireless relay is using a relay station to reprocess and send a signal of a base station. Since costs for such implementation are low, the relay stations are widely deployed by operators to improve a communication experience of edge users of a cell and expand a coverage area of the cell. As a Beyond 3^{rd} Generation/4^{th} Generation (B3GI4G) hot technology, the wireless relay is mainly used to expand the coverage area of the cell and improve a throughput of a system. A transparent relay manner refers to that in the cell, a mobile terminal cannot sense existence of the relay station.

A type II relay manner currently discussed in a Long Term Evolution-Advanced (LTE-A) standard of the 3^{rd} Generation Partnership Project (3GPP) standard organization is the transparent relay manner. In the relay system, since the mobile terminal is unaware of the existence of the relay station, the transparent relay system is capable of implementing backward compatibility of an LTE Rel-8 terminal well.

An HARQ is one of channel adaptive methods applied in a physical layer by an LTE standard, that is, a sending end continuously sends (retransmits) data to a receiving end in a certain coding modulation manner, until the receiving end decodes the data successfully and feeds back an acknowledgment message (ACK).

The transparent relay manner currently discussed in the standard is implemented through an HARQ process of the physical layer, and a basic process is described as follows.

1. A relay station intercepts (namely receives in a specific channel) and successfully decodes data sent by a mobile terminal (or a base station).

2. The relay station participates in a retransmission process, and sends retransmission data to the base station (or the mobile terminal).

A process of an uplink HARQ method in a transparent relay network in the prior art is specifically described as follows.

A mobile terminal sends uplink data to a base station, and a relay station intercepts and decodes the data.

The base station sends a response message (ACK/NACK) to the mobile terminal to feed back a decoding situation of the base station; the relay station sends a response message to the base station to feed back a decoding situation of the relay station.

If the mobile terminal receives NACK information, the mobile terminal executes an uplink retransmission operation; at the same time, if the relay station has decoded the data successfully, the relay station also participates in an uplink retransmission process.

During the implementation of the present invention, the inventor finds that the prior art has at least the following problems. As long as the base station does not receive the uplink data from the mobile terminal successfully, even if the relay station has received the uplink data successfully, the mobile terminal still receives the NACK information fed back by the base station. As a result, the mobile terminal has to participate in all subsequent retransmission processes, which causes the mobile terminal to execute unnecessary uplink operations, and increases times of retransmission that the mobile terminal participates in, thereby increasing power consumption of the mobile terminal.

### SUMMARY OF THE INVENTION

Embodiments of the present invention provide an uplink HARQ method and a device in a transparent relay network, which are capable of reducing times of retransmission that a mobile terminal participates in, thereby reducing power consumption of the mobile terminal.

An uplink HARQ method in a transparent relay network provided in an embodiment of the present invention includes:
intercepting and decoding, by a relay station, uplink data sent from a mobile terminal to a base station;
judging, by the relay station, whether decoding of the uplink data is successful;
when the relay station judges that the decoding of the uplink data is successful, sending, by the relay station, acknowledgment response information to the base station to notify the base station that the relay station has received the uplink data successfully, when the base station does not decode the uplink data successfully, sending, by the relay station, the acknowledgment response information to the mobile terminal; and
when the relay station judges that the decoding of the uplink data is successful and receives negative-acknowledgment information returned by the base station to the relay station, sending, by the relay station, the intercepted uplink data to the base station, where the negative-acknowledgment information represents that the base station does not successfully decode the uplink data sent from the mobile terminal to the base station.

An uplink HARQ method in a transparent relay network further provided in an embodiment of the present invention includes:
receiving and decoding, by a base station, uplink data sent from a mobile terminal to the base station;
judging, by the base station, whether decoding of the uplink data is successful;
if the base station judges that the decoding of the uplink data is not successful, sending, by the base station, an acknowledgment response message that is sent by the relay station and represents that the relay station has received the uplink data successfully to the mobile terminal; and
if the base station judges that the decoding of the uplink data is not successful, further sending, by the base station, negative-acknowledgment information to the relay station, where when the relay station intercepts and successfully decodes the uplink data, the negative-acknowledgment information is used for the relay station to send the intercepted uplink data to the base station according to the negative-acknowledgment information.

A relay station in a transparent relay network provided in an embodiment of the present invention includes:
an interception and decoding unit, configured to intercept and decode uplink data sent from a mobile terminal to a base station;
a judging unit, configured to judge whether the interception and decoding unit decodes the uplink data successfully;
a receiving unit, configured to receive negative-acknowledgment information returned by the base station to the relay station, where the negative-acknowledgment information represents that the base station does not successfully decode the uplink data sent from the mobile terminal to the base station; and
a sending unit, configured to send acknowledgment response information to the base station to notify the base station that the relay station has received the uplink data successfully when the judging unit judges that the interception and decoding unit decodes the uplink data successfully, and send the acknowledgment response information to the mobile terminal when the base station does not decode the uplink data successfully;
where the sending unit is further configured to send the uplink data intercepted by the interception and decoding unit to the base station when the judging unit judges that the interception and decoding unit decodes the uplink data successfully and the receiving unit receives the negative-acknowledgment information returned by the base station.

A base station in a transparent relay network further provided in an embodiment of the present invention includes:
a receiving and decoding unit, configured to receive and decode uplink data sent from a mobile terminal to a base station;
a judging unit, configured to judge whether the receiving and decoding unit decodes the uplink data successfully; and
a sending unit, configured to send to the mobile terminal an acknowledgment response message that is sent by a relay station and represents that the relay station has successfully received the uplink data sent from the mobile terminal to the base station when the judging unit judges that the receiving and decoding unit does not decode the uplink data successfully;
where the sending unit is further configured to send negative-acknowledge information to the relay station when the judging unit judges that the receiving and decoding unit does not decode the uplink data successfully, and when the relay station intercepts and successfully decodes the uplink data, the negative-acknowledgment information is used for the relay station to send the intercepted uplink data to the base station according to the negative-acknowledgment information,

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal.

### BRIEF DESCRIPTION OF THE DRAWINGS

To illustrate the technical solutions according to the embodiments of the present invention more clearly, the accompanying drawings required for describing the embodiments are introduced below briefly. Apparently, the accompanying drawings in the following descriptions merely show some of the embodiments of the present invention, and persons of ordinary skill in the art can obtain other drawings according to the accompanying drawings without creative efforts.

FIG. 1 is a schematic flow chart of a method for retransmitting uplink data through a relay station in a transparent relay network according to Embodiment 1 of the present invention;

FIG. 2 is a schematic flow chart of an uplink HARQ method in a transparent relay network according to Embodiment 2 of the present invention;

FIG. 3 is a schematic flow chart of an uplink HARQ method in a transparent relay network according to Embodiment 3 of the present invention;

FIG. 4 is a schematic structure diagram of a relay station in a transparent relay network according to an embodiment of the present invention;

FIG. 5 is a schematic structure diagram of a base station in a transparent relay network according to an embodiment of the present invention; and

FIG. 6 is a schematic diagram of a relay station-base station physical uplink channel structure and resource mapping of the relay station-base station PUCCH according to an embodiment of the present invention and in the prior art.

### DETAILED DESCRIPTION OF THE EMBODIMENTS

In order to make the objectives, technical solutions and advantages of the present invention clearer, the present invention is hereinafter described in detail with reference to the accompanying drawings and embodiments. It should be understood that the embodiments described herein are merely for the illustration of the present invention, and is not intended to limit the present invention.

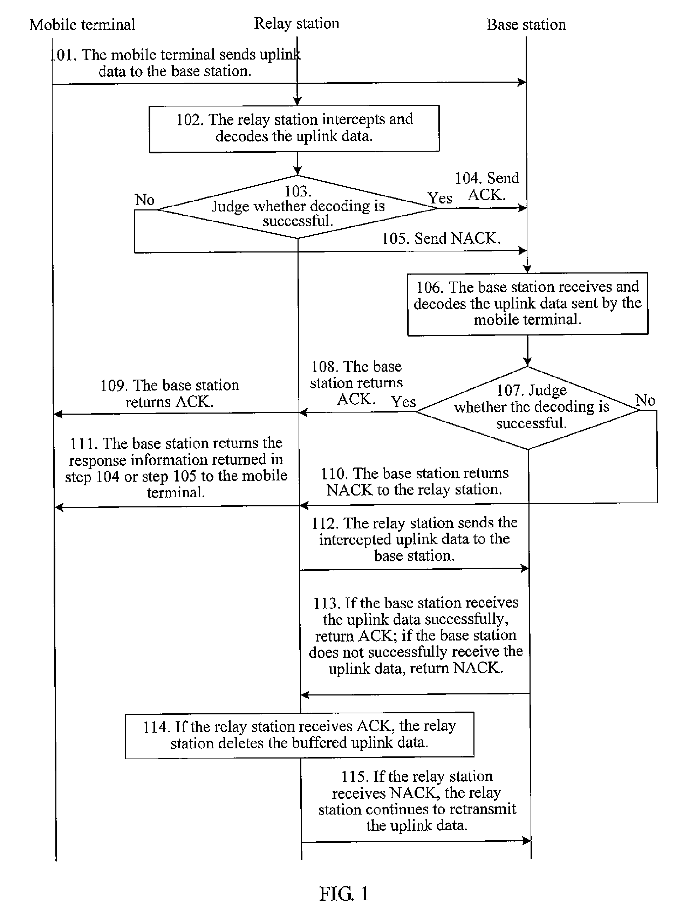

Referring to FIG. 1, FIG. 1 is a schematic flow chart of a method for retransmitting uplink data through a relay station in a transparent relay network according to Embodiment 1 of the present invention, where the method includes the following steps.

Step 101: A mobile terminal sends uplink data to a base station.

The mobile terminal may periodically send an uplink detection signal, and a relay station corresponding to the mobile terminal receives the uplink detection signal, so as to obtain uplink mobile terminal-relay station link channel quality. The relay station uploads the obtained uplink mobile terminal-relay station link channel quality to the base station. The base station executes uplink scheduling according to the uplink mobile terminal-relay station link channel quality, and distributes a corresponding channel resource, a modulation coding manner and appropriate power for the mobile terminal, so as to ensure as much as possible that the relay station may successfully decode the uplink data sent by the mobile terminal. The base station notifies the mobile terminal of an uplink scheduling result, and the mobile terminal sends the uplink data to the base station according to the uplink scheduling result.

Step 102: The relay station intercepts and decodes the uplink data sent from the mobile terminal to the base station.

When the base station notifies the mobile terminal of the uplink scheduling result, the relay station intercepts a physical downlink control channel and further obtains uplink scheduling information with which the base station schedules the mobile terminal. In step 102, the relay station intercepts and decodes the uplink data, which is sent from the mobile terminal to the base station, on a corresponding uplink channel resource according to the obtained uplink scheduling information with which the base station schedules the mobile terminal.

Step 103: The relay station judges whether decoding of the uplink data in step 102 is successful. If the decoding is successful, execute step 104; if the decoding is not successful, execute step 105.

If the relay station judges that the decoding of the uplink data in step 102 is successful, it represents that the relay station has successfully received the uplink data sent from the mobile terminal to the base station; if the decoding is not successful, it represents that the relay station does not successfully receive the uplink data sent from the mobile terminal to the base station. When the relay station judges that the decoding of the uplink data is successful, the relay station performs buffering on the uplink data.

Step 104: If a judgment result in step 103 is that the decoding is successful, send acknowledgment response information ACK to the base station to notify the base station that the relay station has successfully received the uplink data sent from the mobile terminal to the base station.

Step 105: If the judgment result in step 103 is that the decoding is not successful, send negative-acknowledgment response information NACK to the base station to notify the base station that the relay station does not successfully receive the uplink data sent from the mobile terminal to the base station.

Step 106: The base station receives and decodes the uplink data sent by the mobile terminal. The base station receives and decodes the uplink data sent by the mobile terminal in step 101.

Step 107: The base station judges whether decoding of the uplink data in step 106 is successful. If the decoding is successful, execute step 108; if the decoding is not successful, execute step 110 or step 111.

If the base station judges that the decoding of the uplink data in step 106 is successful, it represents that the base station has successfully received the uplink data sent from the mobile terminal to the base station; if the decoding is not successful, it represents that the base station does not successfully receive the uplink data sent from the mobile terminal to the base station.

Step 108: If a judgment result in step 107 is that the decoding is successful, the base station sends the acknowledgment response information ACK to the relay station to notify the relay station that the base station has successfully received the uplink data sent from the mobile terminal to the base station.

Step 109: If the judgment result in step 107 is that the decoding is successful, the base station sends the acknowledgment response information ACK to the mobile terminal to notify the mobile terminal that the base station has successfully received the uplink data sent from the mobile terminal to the base station. It can be understood that step S 108 and step S 109 may be performed at the same time, or performed in sequence, and sequential numbers of the steps do not indicate a limitation on a sequence of the steps.

Step 110: If the judgment result in step 107 is that the decoding is not successful, the base station sends the negative-acknowledgment response information NACK to the relay station to notify the relay station that the base station does not successfully receive the uplink data sent from the mobile terminal to the base station.

Step 111: If the judgment result in step 107 is that the decoding is not successful, the base station returns the response information returned in step 104 or step 105 to the mobile terminal.

Since the relay station is transparent for the mobile terminal, that is, the mobile terminal cannot sense existence of the relay station, the relay station is incapable of directly sending a response message to the mobile terminal. Through the step, the base station may notify the mobile terminal of a situation of intercepting and decoding the uplink data, which is sent from the mobile terminal to the base station, by the relay station, so that the mobile terminal learns a situation of the uplink data sent from the mobile terminal to the base station.

If the base station returns ACK, which is the same as the response information returned in step 108, it represents that the uplink data has been received successfully as in step 108. However, in this step, the uplink data is received by the relay station successfully, and in step 108, the uplink data is received by the base station successfully. Although the base station does not successfully receive the uplink data sent by the mobile terminal, if the relay station has successfully received the uplink data sent by the mobile terminal at this time, the mobile terminal receives ACK returned by the base station at this time. Therefore, the mobile terminal does not retransmit the uplink data, and a retransmission action of the uplink data is completed by the relay station.

Step 112: If the relay station receives the negative-acknowledgment response information NACK returned by the base station, and the relay station judges that the decoding is successful in step 103, the relay station sends the intercepted uplink data to the base station.

Like the mobile terminal, the relay station also periodically sends the uplink detection signal that is used to detect uplink relay station-base station link channel quality. If in step 107, the base station judges that the uplink data sent from the mobile terminal to the base station is not received successfully, and the base station receives the acknowledgment response information ACK that is sent in step 104 and represents that the relay station has successfully received the uplink data sent from the mobile terminal to the base station, the base station executes uplink scheduling according to the detected uplink relay station-base station link channel quality to distribute an appropriate retransmission resource, a modulation coding manner and appropriate power for the relay station, which are used for the relay station to send uplink retransmission data to the base station and send a scheduling result to the relay station.

After receiving the negative-acknowledgment response information NACK returned by the base station, the relay station learns, through the negative-acknowledgment information NACK, that the base station does not successfully receive the uplink data sent from the mobile terminal to the base station. If the relay station judges that the decoding is successful in step 103, that is, the relay station has successfully received the uplink data sent from the mobile terminal to the base station, the relay station sends the uplink data to the base station on the uplink retransmission resource distributed by the base station, that is, the relay station retransmits the uplink data that is not successfully received by the base station previously.

Step 113: If the base station successfully receives the uplink data retransmitted by the relay station, return ACK; if the base station does not successfully receive the uplink data retransmitted by the relay station, return NACK.

Step 114: If the relay station receives ACK returned by the base station in step 113, the relay station deletes the buffered uplink data and ends an uplink hybrid automatic retransmission process.

Step 115: If the relay station receives NACK returned by the base station in step 113, the relay station continues to retransmit the uplink data until receiving the acknowledgment response information ACK returned by the base station.

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal. At the same time, since the retransmission times of the mobile terminal are reduced, interferences on data transmission of other mobile terminals in the transparent relay network caused by the retransmission of the mobile terminal are also reduced.

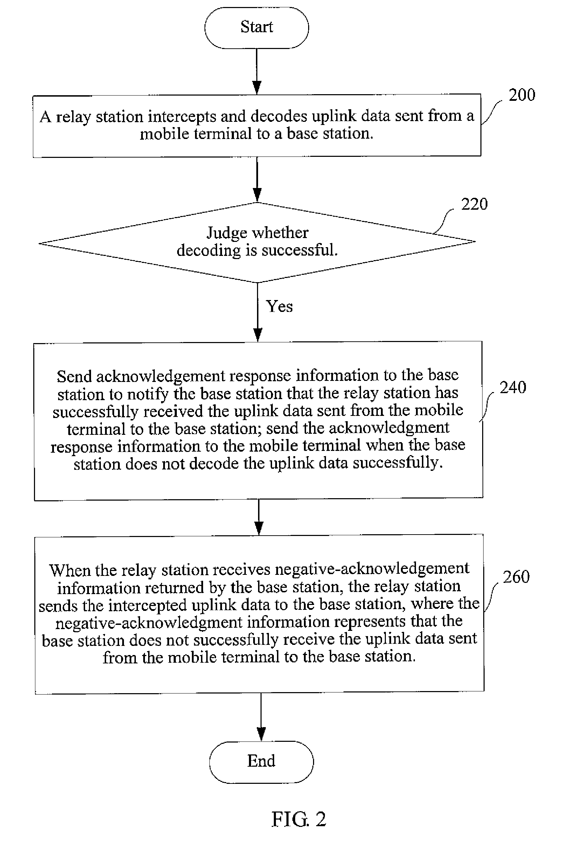

Referring to FIG. 2, FIG. 2 is a schematic flow chart of an uplink HARQ method in a transparent relay network according to Embodiment 2 of the present invention, where the method includes the following steps.

Step 200: A relay station intercepts and decodes uplink data sent from a mobile terminal to a base station.

The mobile terminal may periodically send an uplink detection signal, and the relay station corresponding to the mobile terminal receives the uplink detection signal, so as to obtain uplink mobile terminal-relay station link channel quality. The relay station uploads the obtained uplink mobile terminal-relay station link channel quality to the base station. The base station executes uplink scheduling according to the uplink mobile terminal-relay station link channel quality, and distributes a corresponding channel resource, a modulation coding manner and appropriate power for the mobile terminal, so as to ensure as much as possible that the relay station may successfully decode the uplink data sent by the mobile terminal. The base station notifies the mobile terminal of an uplink scheduling result, and the mobile terminal sends the uplink data to the base station according to the uplink scheduling result.

When the base station notifies the mobile terminal of the uplink scheduling result, the relay station intercepts a physical downlink control channel and further obtains uplink scheduling information with which the base station schedules the mobile terminal. In step 200, the relay station intercepts and decodes the uplink data, which is sent from the mobile terminal to the base station, on a corresponding uplink channel resource according to the obtained uplink scheduling information with which the base station schedules the mobile terminal.

Step 220: The relay station judges whether decoding of the uplink data in step 200 is successful. When it is judged that the decoding is successful, execute step 240 or step 260. When the relay station judges that the decoding of the uplink data is successful, the relay station performs buffering on the uplink data.

Step 240: The relay station sends acknowledgment response information to the base station to notify the base station that the relay station has successfully received the uplink data sent from the mobile terminal to the base station, when the base station does not decode the uplink data successfully, the relay station sends the acknowledgment response information to the mobile terminal. In this way, the mobile terminal may learn in time that the relay station has successfully received the uplink data sent from the mobile terminal to the base station, so as to avoid unnecessary retransmission of the mobile terminal.

Step 260: When the relay station receives negative-acknowledgment information returned by the base station, if it is judged in step 220 that the decoding is successful, the relay station sends the intercepted uplink data to the base station, where the negative-acknowledgment information represents that the base station does not successfully receive the uplink data sent from the mobile terminal to the base station.

The mobile terminal sends the uplink data to the base station. The base station receives and decodes the uplink data sent by the mobile terminal, and judges whether the decoding is successful. If it is judged that the decoding is not successful, the base station sends negative-acknowledgment information to the relay station, where the negative-acknowledgment information represents that the base station does not successfully decode the uplink data sent from the mobile terminal to the base station.

After step 260, the embodiment of the present invention may further includes: after the intercepted uplink data is sent to the base station, if the relay station receives response acknowledgment information ACK returned by the base station, it represents that the base station has successfully received the uplink data retransmitted by the relay station, and the relay station deletes the previously buffered intercepted uplink data sent by the mobile terminal.

When the relay station judges in step 220 that the decoding is successful, it represents that the relay station has successfully received the uplink data sent from the mobile terminal to the base station. When receiving the negative-acknowledgment information returned by the base station, the relay station sends the intercepted uplink data to the base station, that is, the uplink data that is not successfully received by the base station previously is retransmitted through the relay station.

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal. At the same time, since the retransmission times of the mobile terminal are reduced, interferences on data transmission of other mobile terminals in the transparent relay network caused by the retransmission of the mobile terminal are also reduced.

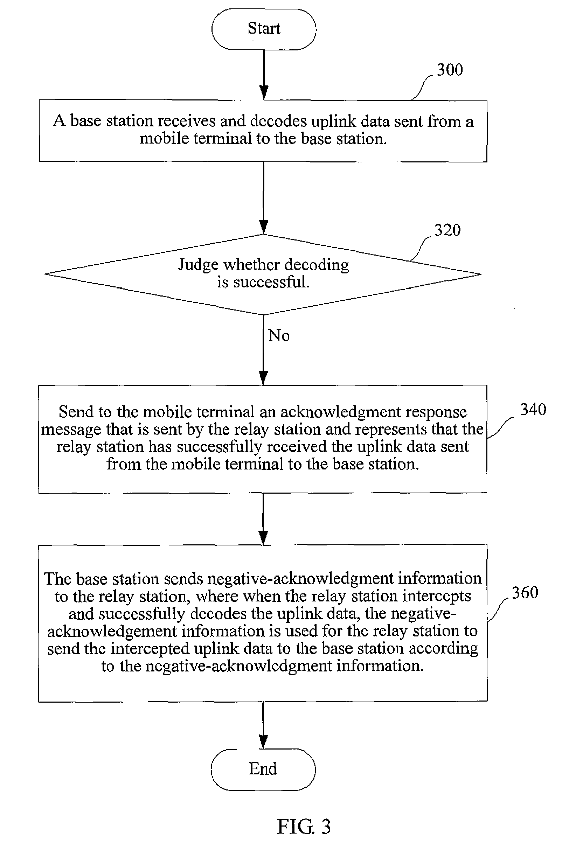

Referring to FIG. 3, FIG. 3 is a schematic flow chart of an uplink HARQ method in a transparent relay network according to Embodiment 3 of the present invention, where the method includes the following steps.

Step 300: A base station receives and decodes uplink data sent from a mobile terminal to the base station.

The mobile terminal may periodically send an uplink detection signal, and a relay station corresponding to the mobile terminal receives the uplink detection signal, so as to obtain uplink mobile terminal-relay station link channel quality. The relay station uploads the obtained uplink mobile terminal-relay station link channel quality to the base station. The base station executes uplink scheduling according to the uplink mobile terminal-relay station link channel quality, and distributes a corresponding channel resource, a modulation coding manner and appropriate power for the mobile terminal, so as to ensure as much as possible that the relay station may successfully decode the uplink data sent by the mobile terminal. The base station notifies the mobile terminal of an uplink scheduling result. The mobile terminal sends the uplink data to the base station according to the uplink scheduling result. The base station receives and decodes the uplink data sent by the mobile terminal.

Step 320: The base station judges whether decoding of the uplink data in step 300 data is successful. If the decoding is not successful, execute step 340 or step 360.

Step 340: The base station sends to the mobile terminal an acknowledgment response message that is sent by the relay station and represents that the relay station has successfully received the uplink data sent from the mobile terminal to the base station. In this way, the mobile terminal may learn in time that the relay station has successfully received the uplink data sent from the mobile terminal to the base station, so as to avoid unnecessary retransmission of the mobile terminal.

Step 360: The base station sends negative-acknowledgment information to the relay station, where when the relay station intercepts and successfully decodes the uplink data, the negative-acknowledgment information is used for the relay station to send the intercepted uplink data to the base station according to the negative-acknowledgment information.

It can be understood that step 340 and step 360 do not have a strict sequence. The base station may send the acknowledgment response message in step 340 and the negative-acknowledgment information in step 360 at the same time, or send the acknowledgment response message and the negative-acknowledgment information in a random sequence, which does not affect the implementation of the embodiment of the present invention.

If it is judged in step 320 that the base station does not decode the uplink data successfully, which represents that the base station does not successfully receive the uplink data sent by the mobile terminal, the base station sends the negative-acknowledgment information to the relay station. After the relay station receives the negative-acknowledgment information, the relay station may learn that the base station does not successfully receive the uplink data sent by the mobile terminal.

When the base station receives and decodes the uplink data sent from the mobile terminal to the base station in step 300, the relay station also intercepts and decodes the uplink data sent from the mobile terminal to the base station. Specifically, when the base station notifies the mobile terminal of the uplink scheduling result, the relay station intercepts a physical downlink control channel and further obtains uplink scheduling information with which the base station schedules the mobile terminal. The relay station intercepts and decodes the uplink data, which is sent from the mobile terminal to the base station, on a corresponding uplink channel resource according to the obtained uplink scheduling information with which the base station schedules the mobile terminal.

When the relay station judges that the decoding is successful, it represents that the relay station has successfully received the uplink data sent from the mobile terminal to the base station. If the relay station receives the negative-acknowledgment information sent from the base station to the relay station, the relay station sends the intercepted uplink data to the base station according to the negative-acknowledgment information.

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal. At the same time, since the retransmission times of the mobile terminal are reduced, interferences on data transmission of other mobile terminals in the transparent relay network caused by the retransmission of the mobile terminal are also reduced.

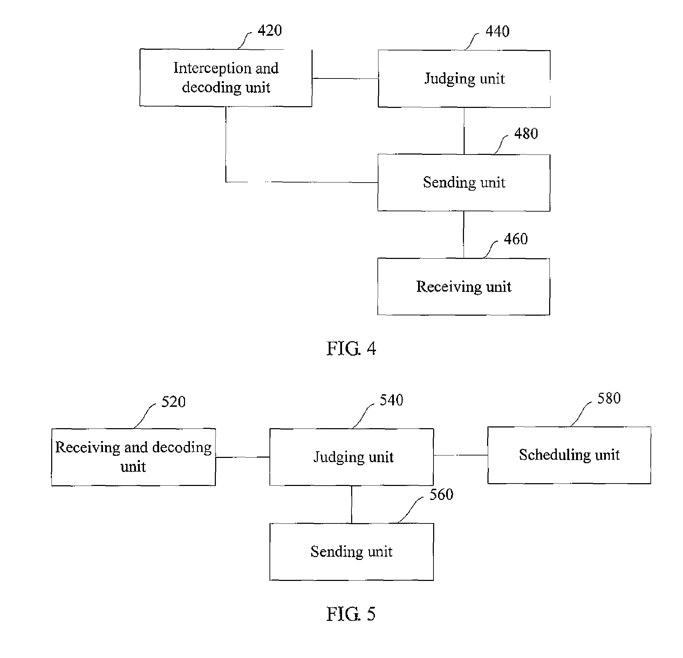

Referring to FIG. 4, FIG. 4 is a schematic structure diagram of a relay station in a transparent relay station according to an embodiment of the present invention, where the relay station includes an interception and decoding unit 420, a judging unit 440, a receiving unit 460 and a sending unit 480.

The interception and decoding unit 420 is configured to intercept and decode uplink data sent from a mobile terminal to a base station.

Specifically, the mobile terminal may periodically send an uplink detection signal, and the receiving unit 460 of a relay station corresponding to the mobile terminal receives the uplink detection signal, so as to obtain uplink mobile terminal-relay station link channel quality. The sending unit 480 of the relay station uploads the obtained uplink mobile terminal-relay station link channel quality to the base station. The base station executes uplink scheduling according to the uplink mobile terminal-relay station link channel quality, and distributes a corresponding channel resource, a modulation coding manner and appropriate power for the mobile terminal, so as to ensure as much as possible that the relay station may successfully decode the uplink data sent by the mobile terminal. The base station notifies the mobile terminal of an uplink scheduling result, and the mobile terminal sends the uplink data to the base station according to the uplink scheduling result.

When the base station notifies the mobile terminal of the uplink scheduling result, the interception and decoding unit 420 of the relay station intercepts a physical downlink control channel and further obtains uplink scheduling information with which the base station schedules the mobile terminal. The interception and decoding unit 420 intercepts and decodes the uplink data, which is sent from the mobile terminal to the base station, on a corresponding uplink channel resource according to the obtained uplink scheduling information with which the base station schedules the mobile terminal.

The judging unit 440 is configured to judge whether the interception and decoding unit 420 decodes the uplink data successfully. When the judging unit 440 judges that the interception and decoding unit 420 decodes the uplink data successfully, it represents that the interception and decoding unit 420 has successfully received the uplink data sent from the mobile terminal to the base station. The interception and decoding unit 420 is further configured to perform buffering on the uplink data when the judging unit 440 judges that the decoding is successful.

The receiving unit 460 is configured to receive negative-acknowledgment information returned by the base station to the relay station, where the negative-acknowledgment information represents that the base station does not successfully decode the uplink data sent from the mobile terminal to the base station. The mobile terminal sends the uplink data to the base station. The base station receives and decodes the uplink data sent by the mobile terminal, and judges whether the decoding is successful. If it is judged that the decoding is not successful, the base station sends negative-acknowledgment information to the receiving unit 460 of the relay station, where the negative-acknowledgment information represents that the base station does not successfully decode the uplink data sent from the mobile terminal to the base station.

The sending unit 480 is configured to send acknowledgment response information to the base station to notify the base station that the relay station has successfully received the uplink data sent from the mobile terminal to the base station when the judging unit 440 judges that interception and decoding unit 420 decodes the uplink data successfully, and send the acknowledgment response information to the mobile terminal when the base station does not decode the uplink data successfully. In this way, the mobile terminal may learn in time that the relay station has successfully received the uplink data sent from the mobile terminal to the base station, so as to avoid unnecessary retransmission of the mobile terminal.

The sending unit 480 is further configured to send the uplink data intercepted by the interception and decoding unit 420 to the base station when the judging unit 440 judges that the interception and decoding unit 420 decodes the uplink data successfully and the receiving unit 460 receives the negative-acknowledgment information returned by the base station.

The interception and decoding unit 420 is further configured to delete the buffered uplink data when the receiving unit 460 receives response acknowledgment information returned by the base station, where the response acknowledgment information represents that the base station has successfully received the uplink data retransmitted by the relay station.

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal. At the same time, since the retransmission times of the mobile terminal are reduced, interferences on data transmission of other mobile terminals in the transparent relay network caused by the retransmission of the mobile terminal are also reduced.

Referring to FIG. 5, FIG. 5 is a schematic structure diagram of a base station in a transparent relay station according to an embodiment of the present invention, where the base station includes a receiving and decoding unit 520, a judging unit 540 and a sending unit 560. It can be understood that the base station may further include a scheduling unit 580.

The receiving and decoding unit 520 is configured to receive and decode uplink data sent from a mobile terminal to a base station.

The mobile terminal may periodically send an uplink detection signal, and a relay station corresponding to the mobile terminal receives the uplink detection signal, so as to obtain uplink mobile terminal-relay station link channel quality. The relay station uploads the obtained uplink mobile terminal-relay station link channel quality to the base station. The scheduling unit 580 of the base station executes uplink scheduling according to the uplink mobile terminal-relay station link channel quality, and distributes a corresponding channel resource, a modulation coding manner and appropriate power for the mobile terminal, so as to ensure as much as possible that the relay station may successfully decode the uplink data sent by the mobile terminal. The base station notifies the mobile terminal of an uplink scheduling result through the sending unit 560. The mobile terminal sends the uplink data to the base station according to the uplink scheduling result. The receiving and decoding unit 520 of the base station receives and decodes the uplink data sent by the mobile terminal.

The judging unit 540 is configured to judge whether the receiving and decoding unit 520 decodes the uplink data successfully. If the decoding is successful, it represents that the base station successfully receives the uplink data sent by the mobile terminal; if the decoding is not successful, it represents that the base station does not successfully receive the uplink data sent by the mobile terminal.

The sending unit 560 is configured to send to the mobile terminal an acknowledgment response message that is sent by a relay station and represents that the relay station has successfully received the uplink data sent from the mobile terminal to the base station when the judging unit 540 judges that the receiving and decoding unit 520 does not decode the uplink data successfully. In this way, the mobile terminal may learn in time that the relay station has successfully received the uplink data sent from the mobile terminal to the base station, so as to avoid unnecessary retransmission of the mobile terminal.

The sending unit 560 is further configured to send negative-acknowledge information to the relay station when the judging unit 540 judges that the receiving and decoding unit 520 does not decode the uplink data successfully, where when the relay station intercepts and successfully decodes the uplink data, the negative-acknowledgment information is used for the relay station to send the intercepted uplink data to the base station according to the negative-acknowledgment information.

When the base station receives and decodes the uplink data sent from the mobile terminal to the base station, the relay station also intercepts and decodes the uplink data sent from the mobile terminal to the base station. Specifically, when the base station notifies the mobile terminal of the uplink scheduling result, the relay station intercepts a physical downlink control channel and further obtains uplink scheduling information with which the base station schedules the mobile terminal. The relay station intercepts and decodes the uplink data, which is sent from the mobile terminal to the base station, on a corresponding uplink channel resource according to the obtained uplink scheduling information with which the base station schedules the mobile terminal.

When the relay station judges that the decoding is successful, it represents that the relay station has successfully received the uplink data sent from the mobile terminal to the base station. If the relay station receives the negative-acknowledgment information sent from the sending unit 560 of the base station to the relay station, the relay station sends the intercepted uplink data to the base station according to the negative-acknowledgment information.

In the embodiment of the present invention, when the base station does not successfully receive the uplink data sent from the mobile terminal to the base station, if the relay station has successfully received the uplink data sent by the mobile terminal, response acknowledgment information representing that the relay station has successfully received the uplink data sent by the mobile terminal is sent to the mobile terminal, so that the mobile terminal learns in time that the relay station has successfully received the uplink data sent from the mobile terminal to the base station. Meanwhile, negative-acknowledgment response information is returned to the relay station, and the relay station performs subsequent uplink data retransmission, which avoids unnecessary retransmission of the mobile terminal, thereby decreasing retransmission times of the mobile terminal and further reducing power consumption of the mobile terminal. At the same time, since the retransmission times of the mobile terminal are reduced, interferences on data transmission of other mobile terminals in the transparent relay network caused by the retransmission of the mobile terminal are also reduced.

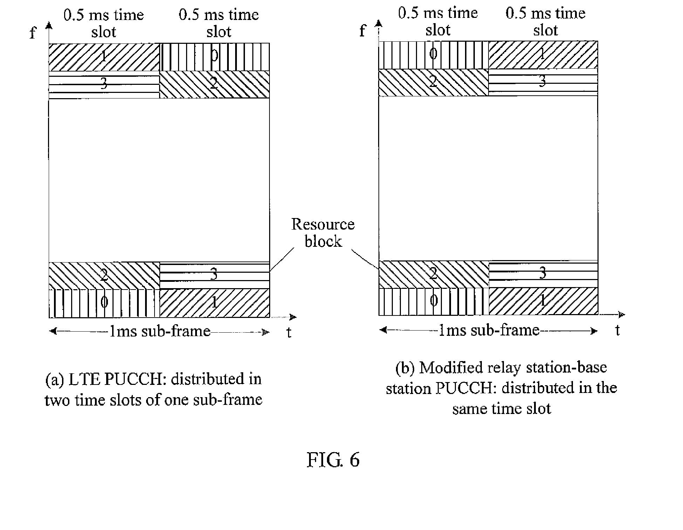

Referring to FIG. 6, FIG. 6 is a schematic diagram of a relay station-base station Physical Uplink Control Channel (PUCCH) structure and resource mapping of the relay station-base station PUCCH according to an embodiment of the present invention and in the prior art. In an LTE system in the prior art, ACK/NACK information is transmitted through a PUCCH. According to specifications of an LTE protocol, a PUCCH structure is as shown in FIG. 6(a). One PUCCH corresponds to two resource blocks on two time slots in one sub-frame (1 ms). For example, FIG. 6(a) indicates four PUCCHs, where each dashed area represents one physical resource block, and two resource blocks with the same label correspond to the same PUCCH. It can be seen from FIG. 6(a) that in the prior art, one PUCCH is mapped to one resource block at a high end and one resource block at a low end of a system transmission bandwidth, and is distributed in two time slots in one sub-frame (namely occupies a full sub-frame in terms of time).

In addition, the LTE standard further specifies that an uplink HARQ adopts a synchronization manner, that is, a time domain location of HARQ retransmission each time is limited to a preset location. Specifically, in 4 ms after uplink transmission, a mobile terminal receives response information sent by a base station. In order to effectively ensure such time sequence in the present specifications to implement backward compatibility of a transparent relay solution and an existing LTE Rel-8 mobile terminal, a certain period of time (at least 0.5 ms) should be reserved for the base station to process a response message (ACK/NACK) sent by the relay station, so as to ensure that the base station can forward ACK information fed back by the relay station to the mobile terminal at a sending moment of a next sub-frame after the base station processes a signaling message.

According to the present LTE protocol, the sending of the response message (ACKINACK) to the base station by the relay station needs to occupy 1 ms, which fails to reserve adequate time for the base station to process the response message (ACK/NACK), thereby failing to implement compatibility with the HARQ of the present synchronization manner of the LTE protocol.

In order to ensure that hardware processing in an actual system can be realized, in the embodiment of the present invention, the relay station sends ACK/NACK information on the relay station-base station PUCCH, and the PUCCH limits the completion of the sending to 0.5 ms (namely one time slot). As shown in FIG. 6(b), after modification, one PUCCH is mapped to one resource block at a high end and one resource block at a low end of a system transmission bandwidth in one time slot, so as to ensure that the relay station sends an ACK/NACK feedback to the base station in 0.5 ms, thereby reserving processing time for an eNB to decode and process the response message (ACK/NACK) sent by the relay station and further implementing the HARQ of the synchronization manner.

Persons of ordinary skill in the art should understand that all or a part of the processes of the method according to the embodiments of the present invention may be implemented by a program instructing relevant hardware. The program may be stored in a computer readable storage medium. When the program runs, the processes of the method according to the embodiments of the present invention are performed. The storage medium may be a magnetic disk, an optical disk, a Read-Only Memory (ROM) or a Random Access Memory (RAM).

The above is only the exemplary implementation of the present invention, but the protection scope of the present invention is not limited herein. Any change or replacement that can be easily figured out by persons skilled in the art within the technical scope disclosed by the present invention shall be covered by the protection scope of the present invention. Therefore, the protection scope of the present invention shall be the protection scope of the claims.

## Claims

1. An uplink Hybrid Automatic Repeat reQuest (HARQ) method in a transparent relay network, comprising:
intercepting and decoding, by a relay station, uplink data sent from a mobile terminal to a base station;
judging, by the relay station, whether decoding of the uplink data is successful;
when the relay station judges that the decoding of the uplink data is successful, sending, by the relay station, acknowledgment response information to the base station to notify the base station that the relay station has received the uplink data successfully, when the base station does not decode the uplink data successfully, sending the acknowledgment response information to the mobile terminal; and
when the relay station judges that the decoding of the uplink data is successful and receives negative-acknowledgment information returned by the base station to the relay station, sending, by the relay station, the intercepted uplink data to the base station, wherein the negative-acknowledgment information represents that the base station does not successfully decode the uplink data sent from the mobile terminal to the base station.

2. The method according to claim 1, further comprising: uploading, by the relay station, obtained uplink mobile terminal-relay station link channel quality to the base station.

3. The method according to claim 1, wherein the intercepting and decoding, by the relay station, the uplink data sent from the mobile terminal to the base station comprises:
intercepting, by the relay station, uplink scheduling information sent by the base station after the base station executes uplink scheduling according to uplink mobile terminal-relay station link channel quality; and
intercepting and decoding, by the relay station, the uplink data, which is sent from the mobile terminal to the base station, on a corresponding uplink channel resource according to the uplink scheduling information.

4. The method according to claim 1, further comprising: performing, by the relay station, buffering on the uplink data when the relay station judges that the decoding of the uplink data is successful.

5. The method according to claim 4, wherein after the relay station sends the intercepted uplink data to the base station, the method further comprises: if the relay station receives response acknowledgment information returned by the base station, and the response acknowledgment information represents that the base station has successfully received the uplink data retransmitted by the relay station, deleting the buffered uplink data.

6. An uplink Hybrid Automatic Repeat reQuest (HARQ) method in a transparent relay network, comprising:
receiving and decoding, by a base station, uplink data sent by a mobile terminal;
judging, by the base station, whether decoding of the uplink data is successful;
if the base station judges that the decoding of the uplink data is not successful, sending, by the base station, an acknowledgment response message that is sent by the relay station and represents that the relay station has received the uplink data successfully to the mobile terminal; and
if the base station judges that the decoding of the uplink data is not successful, further sending, by the base station, negative-acknowledgment information to the relay station, wherein when the relay station intercepts and successfully decodes the uplink data, the negative-acknowledgment information is used for the relay station to send the intercepted uplink data to the base station according to the negative-acknowledgment information.

7. The method according to claim 6, further comprising:
receiving, by the base station, uplink mobile terminal-relay station link channel quality sent by the relay station; and
executing, by the base station, uplink scheduling according to the uplink mobile terminal-relay station link channel quality, and notifying the mobile terminal of an uplink scheduling result.

8. A relay station in a transparent relay network, comprising:
an interception and decoding unit, configured to intercept and decode uplink data sent from a mobile terminal to a base station;
a judging unit, configured to judge whether the interception and decoding unit decodes the uplink data successfully;
a receiving unit, configured to receive negative-acknowledgment information returned by the base station to the relay station, wherein the negative-acknowledgment information represents that the base station does not successfully decode the uplink data sent from the mobile terminal to the base station; and
a sending unit, configured to send acknowledgment response information to the base station to notify the base station that the relay station has received the uplink data successfully when the judging unit judges that the interception and decoding unit decodes the uplink data successfully, and send the acknowledgment response information to the mobile terminal when the base station does not decode the uplink data successfully;
wherein the sending unit is further configured to send the uplink data intercepted by the interception and decoding unit to the base station when the judging unit judges that the interception and decoding unit decodes the uplink data successfully and the receiving unit receives the negative-acknowledgment information returned by the base station.

9. The relay station according to claim 8, wherein the sending unit is further configured to upload obtained uplink mobile terminal-relay station link channel quality to the base station, the interception and decoding unit is further configured to intercept uplink scheduling information sent by the base station after the base station executes uplink scheduling according to the uplink mobile terminal-relay station link channel quality, and the interception and decoding unit intercepts and decodes the uplink data, which is sent from the mobile terminal to the base station, on a corresponding uplink channel resource according to the uplink scheduling information.

10. The relay station according to claim 8, wherein the interception and decoding unit is further configured to perform buffering on the uplink data when the judging unit judges that decoding is successful.

11. The relay station according to claim 10, wherein the interception and decoding unit is further configured to delete the buffered uplink data when the receiving unit receives response acknowledgment information returned by the base station, and the response acknowledgment information represents that the base station has successfully received the uplink data retransmitted by the relay station.

12. A base station in a transparent relay network, comprising:
a receiving and decoding unit, configured to receive and decode uplink data sent from a mobile terminal to a base station;
a judging unit, configured to judge whether the receiving and decoding unit decodes the uplink data successfully; and
a sending unit, configured to send to the mobile terminal an acknowledgment response message that is sent by a relay station and represents that the relay station has successfully received the uplink data sent from the mobile terminal to the base station when the judging unit judges that the receiving and decoding unit does not decode the uplink data successfully;
wherein the sending unit is further configured to send negative-acknowledge information to the relay station when the judging unit judges that the receiving and decoding unit does not decode the uplink data successfully, and when the relay station intercepts and successfully decodes the uplink data, the negative-acknowledgment information is used for the relay station to send the intercepted uplink data to the base station according to the negative-acknowledgment information.

13. The relay station according to claim 12, further comprising: a scheduling unit, configured to execute uplink scheduling according to uplink mobile terminal-relay station link channel quality sent by the relay station, and notify the mobile terminal of an uplink scheduling result through the sending unit.
